# EUROPÄISCHE PATENTSCHRIFT

(11) **EP 4 264 641 B1**
(45) Veröffentlichungstag und Bekanntmachung des Hinweises auf die Patenterteilung: **23.09.2026**
(21) Anmeldenummer: 21823284.1
(22) Anmeldetag: 02.12.2021
(51) Int. Cl.: H01B 1/04, H01B 1/24

(54) **VERFAHREN ZUM HERSTELLEN EINES ELEKTRISCH LEITFÄHIGEN LEITERSTRANGS MIT ZUMINDEST EINEM KOHLENSTOFFLEITER**
METHOD FOR PRODUCING AN ELECTRICALLY CONDUCTIVE CONDUCTOR STRAND HAVING AT LEAST ONE CARBON CONDUCTOR
PROCÉDÉ DE PRODUCTION D'UN BRIN CONDUCTEUR ÉLECTROCONDUCTEUR COMPORTANT AU MOINS UN CONDUCTEUR DE CARBONE

(30) Priorität: 15.12.2020 DE 102020215865; 11.03.2021 DE 102021202368; 23.07.2021 DE 102021207914
(43) Veröffentlichungstag der Anmeldung: 25.10.2023
(73) Patentinhaber: Robert Bosch GmbH, 70442 Stuttgart (DE)
(72) Erfinder: KOEHNE, Martin, 71679 Asperg (DE)
(86) Internationale Anmeldenummer: PCT/EP2021/083890
(87) Internationale Veröffentlichungsnummer: WO 2022/128495

(56) Entgegenhaltungen:
- DE-A1- 2 537 272
- DE-A1- 2 946 414
- US-A1- 2010 206 363
- US-A1- 2013 180 581
- US-A1- 2016 019 995

## Beschreibung

### Stand der Technik

Die vorliegende Erfindung betrifft ein Verfahren zum Herstellen eines elektrisch leitfähigen Leiterstrangs aufweisen zumindest einen Kohlenstoffleiter.

Aus dem Stand der Technik sind Kohlenstoffleiter bekannt. Beispielsweise kennt der Stand der Technik elektrische Leiter aus Graphit, pyrolytischem Graphit, Kohlenstoffnanoröhren oder Graphen. Um dessen elektrische Leitfähigkeit zu erhöhen, ist bekannt, den Kohlenstoffleiter zu dotieren. So ist beispielsweise aus DE102019220177 A1 ist bekannt, dass Graphen durch intrinsisch dotiertes Graphen dotiert werden kann. In WO2021004692 A1 wird gezeigt, wie Graphen durch Oxide auf Übergangsmetallen so dotiert werden kann, dass die elektrische Leitfähigkeit gesteigert wird. EP0081004 B1 zeigt, dass die elektrische Leitfähigkeit von Graphit durch das Dotieren mit BF₃, SiF₄, HfF₄, TiF₄, ZrF₄, PF₅, NbF₅, TaF₅, AsF₅ bzw. SbF₅ gesteigert werden kann.

Aus der CN106744888A ist bekannt, Graphen in einer Graphendispersion durch Zugabe von Aluminiumfluorid und Aminen herzustellen. Aus Nakajima, T., Kawaguchi, M., & Watanabe, N. (1981). Ternary intercalation compound of graphite with aluminum fluoride and fluorine. Zeitschrift für Naturforschung B, 36(11), 1419-1423 ist außerdem bekannt, dass Aluminiumfluorid in Grafit interkaliert, wenn in der Gasphase äquimolar Fluor vorhanden ist und wenn ausreichend hohe Temperaturen vorliegen. Nachteil ist, dass die Interkalation hohe Temperaturen benötigt, was dazu führt, dass das Fluor das Graphit bereits ab 300°C fluoriert und so die elektrische Leitfähigkeit verschlechtert.

In EP0212940 wird gezeigt, dass Metallchloride dann besonders gut für die interkalative Dotierung geeignet sind, wenn sie einen niedrigen Sublimations- oder Siedepunkt besitzen. EP0212940 nutzt daher Aluminiumchlorid, das einen sehr niedrigen Sublimationspunkt besitzt, um andere Metallchloride, die einen höheren Sublimations- oder Siedepunkt besitzen, schneller und bei niedrigeren Temperaturen in das Graphit zu interkalieren.

Ebenfalls ist nach dem Stand der Technik nachteilhaft, dass wie durch Matsumoto et al. (Matsumoto, K., Minori, D., Takagi, K., & Hagiwara, R. (2014), Expansion of tetrachloroaluminate-graphite intercalation compound by reaction with anhydrous hydrogen fluoride. Carbon, 67, 434-439) gezeigt, eine Fluorierung von mit Metallchlorid interkaliertem Graphit mit wasserfreier Fluorwasserstoffsäure (HF) dazu führt, dass im Graphit Gase entstehen und der Graphit dadurch expandiert. Dies würde auch analog auch bei den Leitern zu deren Expansion und somit deren Zerstörung führen.

Aus der DE 29 46 414 A1 ist ein Verfahren zur Steigerung der Leitfähigkeit von Graphit offenbart. Bei dem Verfahren wird Graphit in eine Flüssigkeit eingebracht, die einen Interkalationsstoff und ein Metallchlorid, z.B. CoCl2, enthält. Durch eine Wärmebehandlung kann der Interkalationsstoff in das Graphit interkaliert werden.

Aus der US 2010/206363 A1 ist ein Verfahren bekannt, bei dem ein Interkalationsstoff, z.B. AsF5, durch Wärmebehandlung in ein Graphen interkaliert wird.

Aus der US 2013/180581 A1 ist ein Verfahren bekannt, bei dem ein Interkalationsstoff zwischen Graphenlayern eingelagert wird.

### Offenbarung der Erfindung

Das erfindungsgemäße Verfahren mit den Merkmalen des Hauptanspruchs hat demgegenüber den Vorteil, dass ein Leiterstrang mit Kohlenstoffleitern herstellbar ist, der eine höhere elektrische Leitfähigkeit als im Stand der Technik aufweist und der bis mindestens 200°C temperaturbeständig ist.

Die Verfahrensmerkmale des Hauptanspruchs erzeugen nach einer nicht-erfindungsgemäßen ersten Ausführungsform ein Enderzeugnis und nach einer erfindungsgemäßen zweiten und dritten Ausführungsform ein Zwischenerzeugnis, das durch weitere erfindungsgemäße Schritte zu einem Enderzeugnis verarbeitbar ist.

Nach einer zweiten Ausführungsform ist der Interkalationsstoff mindestens ein Metallchlorid, Metallbromid oder Metalliodid, insbesondere Aluminiumchlorid (AlCl₃), Aluminiumbromid (AlBr₃), Aluminiumiodid (AlI₃), Zirconiumchlorid (ZrCl₄), Zirconiumbromid (ZrBr₄), Eisenchlorid (FeCl₃), Magnesiumchlorid (MgCl₂), Magnesiumbromid (MgBr₂) oder Magnesiumiodid (MgI₂), wobei das Metall des Metallchlorids, Metallbromids oder Metalliodids ausgewählt ist aus einer der Gruppen 2,4,5,6,8,10,11,12 oder 13 des Periodensystems. Das Verfahren gemäß der zweiten Ausführungsform hat den Vorteil, dass der Interkalationsstoff bei geringeren Temperaturen in den Leiterstrang interkalierbar ist als im Verfahren gemäß der ersten Ausführungsform.

Sehr vorteilhaft ist, dass das Verfahren gemäß der zweiten Ausführungsform zusätzlich den Schritt umfasst, dass das im Material des jeweiligen Kohlenstoffleiters vorliegende Metallchlorid, Metallbromid und/oder Metalliodid zu Metallfluorid umgewandelt wird, indem der Leiterstrang mit einem Fluorierungsmittel behandelt wird. Das Verfahren gemäß der zweiten Ausführungsform hat gegenüber der ersten Ausführungsform den Vorteil, dass der Interkalationsstoff Metallchlorid, Metallbromid oder Metalliodid bei geringeren Temperaturen in den Leiterstrang interkalierbar ist als das Metallfluorid gemäß der ersten Ausführungsform. Durch die Umwandlung mittels des Fluorierungsmittels wird der Interkalationsstoff, also das Metallchlorid, Metallbromid oder Metalliodid, nachträglich in Metallfluorid und damit in eine starke Lewis-Säure in-situ umgewandelt, wodurch im Kohlenstoffleiter des Leiterstrangs eine hohe elektrische Leitfähigkeit erreicht wird. Der interkalierte Interkalationsstoff bewirkt also im Unterschied zum Verfahren gemäß der ersten Ausführungsform nicht unmittelbar eine starke Erhöhung der elektrischen Leitfähigkeit im Leitermaterial. Dies wird erst nachträglich durch die in-situ-Umwandlung des Interkalationsstoffes mittels des Fluorierungsmittels erreicht. Das Fluorierungsmittel kann insbesondere XeF₂, F₂, ein perfluoriertes oder fluoriertes Olefin wie insbesondere Hexafluorbuten oder Hexafluorpropen, Fluorchlorkohlenwasserstoffe (FCKW) wie insbesondere Trichlorfluormethan, Fluorkohlenwasserstoffe (FKW), wie insbesondere Perfluorhexan, Pentafluorbutan oder Pentafluorpropan umfassen und/oder kann insbesondere in der Gasphase vorliegen oder bei der Fluorierungsbehandlung in die Gasphase übergehen. Die Behandlung mit dem Fluorierungsmittel erfolgt insbesondere bei einer Temperatur kleiner als 200°C, wodurch vermieden wird, dass sich aus dem im Kohlenstoffleiter fein verteilten interkalierten Metallchlorid, Metallbromid oder Metalliodid durch Diffusion Cluster bilden, welche eine Verschlechterung der elektrischen Leitfähigkeit des jeweiligen Kohlenstoffleiters bewirken würden.

Nach einer dritten Ausführungsform ist der Interkalationsstoff ein Organoalkalimetall ist, insbesondere ein Natriumorganyl, speziell insbesondere Natriumnaphthalid (C₁₀H₈Na), n-Amylnatrium (C₅H₁₁Na) oder Benzylnatrium (C₇H₇Na), ein Kaliumorganyl, speziell insbesondere Benzylkalium (C₇H₇K) oder Methylkalium (CH₃K), ein Lithiumorganyl, speziell insbesondere Benzyllithium (C₇H₇Li), n-Hexyllithium (C₆H₁₃Li), n-Butyllithium (C₄H₉Li) und Phenyllithium (C₆H₅Li). Das Verfahren gemäß der dritten Ausführungsform hat den Vorteil, dass der Interkalationsstoff bei geringeren Temperaturen in den Leiterstrang interkalierbar ist als im Verfahren gemäß der ersten Ausführungsform. Außerdem ist bei dem Verfahren gemäß der dritten Ausführungsform kein Hilfsgas wie z.B. Fluor oder Chlor für die Interkalation erforderlich. Darüber hinaus bewirkt die dritte Ausführungsform im Gegensatz zu den anderen Ausführungsformen eine Dotierung des Kohlenstoffleiters vom n-Typ.

Außerdem vorteilhaft ist, dass das Verfahren gemäß der dritten Ausführungsform zusätzlich den Schritt umfasst, dass das im Material des jeweiligen Kohlenstoffleiters vorliegende Organoalkalimetall zu Alkalimetallhydrid, insbesondere Lithiumhydrid (LiH), Natriumhydrid (NaH) oder Kaliumhydrid (KH) umgewandelt wird, indem der Leiterstrang in einer Wasserstoffatmosphäre thermisch behandelt wird, insbesondere bei einer Temperatur von 50°C - 250°C. Das Verfahren gemäß der dritten Ausführungsform hat gegenüber der ersten Ausführungsform den Vorteil, dass das Organoalkalimetall als Interkalationsstoff bei geringeren Temperaturen in den Leiterstrang interkalierbar ist als das Metallfluorid gemäß der ersten Ausführungsform. Die Interkalation erfolgt aus einem Lösungsmittel heraus, in dem das Organoalkalimetall gelöst ist.

Durch die Reaktion mit Wasserstoff während einer thermischen Behandlung wird der Interkalationsstoff, also das Organoalkalimetall, nachträglich in Alkalimetallhydrid und damit in eine starke Lewis-Base in-situ umgewandelt, wodurch im Kohlenstoffleiter des Leiterstrangs eine hohe elektrische Leitfähigkeit erreicht wird. Das interkalierte Organoalkalimetall als Interkalationsstoff bewirkt also im Unterschied zum Verfahren gemäß der ersten Ausführungsform nicht unmittelbar eine Erhöhung der elektrischen Leitfähigkeit im Leitermaterial. Dies wird erst nachträglich durch die Reaktion des Interkalationsstoffes mit dem Wasserstoff mittels der thermischen Behandlung in der Wasserstoffatmosphäre als in-situ-Umwandlung in das Alkalimetallhydrid und einen organischen Rest erreicht.

Durch die in den Unteransprüchen aufgeführten Maßnahmen sind vorteilhafte Weiterbildungen und Verbesserungen des im Hauptanspruch angegebenen Verfahrens möglich.

Außerdem ist vorteilhaft, wenn das Verfahren gemäß der zweiten Ausführungsform im Falle einer Interkalation in der Gasphase des Reaktorvolumens den Schritt umfasst, dass gasförmiges Chlor, Brom und/oder lod als Hilfsgas in das Reaktorvolumen zugegeben wird. Insbesondere wird bevorzugt Chlor im Falle von einem Metallchlorid als Interkalationsstoff, bevorzugt Brom im Falle von einem Metallbromid als Interkalationsstoff oder bevorzugt lod im Falle von einem Metalliodid als Interkalationsstoff zugegeben. Auf diese Weise wird die Interkalation ermöglicht und/oder beschleunigt, da der Interkalationsstoff nur dadurch interkaliert oder schneller in das Leitermaterial des Leiterstrangs interkalieren kann.

Auch vorteilhaft ist, wenn das Verfahren nach einem der drei Ausführungsformen zusätzlich den Schritt umfasst, dass ein Hydrophobierungsstoff, insbesondere Aliphat, Alkan wie insbesondere Undecan, Perfluortripentylamin, Perfluorperhydrofluoren, Perfluorperhydrophenanthren oder Polysiloxan wie insbesondere Polymethylsiloxan, in das Material des jeweiligen Kohlenstoffleiters interkaliert wird, insbesondere in einer Gasphase oder Flüssigphase. Auf diese Weise wird das Eindringen von Wasser in den Leiterstrang verhindert, so dass der Leiterstrang hinsichtlich seiner Materialeigenschaften, insbesondere der elektrischen Leitfähigkeit und der Materialbeständigkeit, unempfindlich ist gegenüber Wasser.

Darüber hinaus vorteilhaft ist, wenn das Verfahren nach einem der drei Ausführungsformen zusätzlich den Schritt umfasst, dass der Leiterstrang volumenverkleinernd verdichtet wird, beispielsweise um eine volumenvergrößernde Expansion des Leiterstrangs während der Interkalation des Interkalationsstoffes zumindest teilweise rückgängig zu machen. Auf diese Weise wird die elektrische Leitfähigkeit des Leiterstrangs weiter erhöht, da die Porosität und damit der Leiterquerschnitt verringert wird, der elektrische Leiterwiderstand aber unverändert bleibt.

Außerdem kann der biegeschlaffe Leiterstrang mit einem hohen Nutfüllfaktor in Nuten einer elektrischen Maschine angeordnet werden, so dass die Leistung der elektrischen Maschine erhöht werden kann.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Darstellung eines Leiterstrangs, der mit einem Verfahren gemäß einem Ausführungsbeispiel der Erfindung herstellbar ist,
- Figur 2: einen schematischen Querschnitt durch den Leiterstrang aus Figur 1, der in einem Reaktorvolumen angeordnet ist,
- Figur 3: eine schematische Darstellung der Interkalation während einer Wärmebehandlung im Rahmen des Verfahrens gemäß einem Ausführungsbeispiel der Erfindung, und
- Figur 4: eine schematische Darstellung einer erfindungsgemäßen in-situ Umwandlung zu Metallfluoriden bzw. Alkalimetallhydriden.

### Ausführungsformen der Erfindung

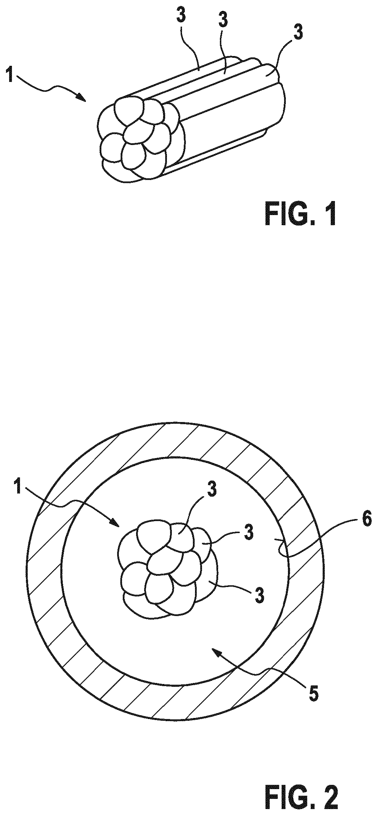

Figur 1 zeigt schematisch einen Leiterstrang 1, der zumindest einen Kohlenstoffleiter 3 aufweist.

Zum Durchführen des erfindungsgemäßen Verfahrens wird in einem ersten Schritt zumindest ein Leiterstrang 1 als Zwischenerzeugnis bereitgestellt oder hergestellt.

Dieser Leiterstrang 1 ist ein Leiterverbund, beispielsweise ein Garn, der beispielsweise aus einer Vielzahl von Kohlenstoffleitern 3 aufgebaut ist, wobei der Kohlenstoffleiter 3 jeweils ein Leiterfilm, ein Filament oder eine Faser sein kann. Alternativ können die Kohlenstoffleiter 3 aber auch Garne oder Leiterverbunde mit geringerem Durchmesser als der Leiterstrang 1 sein. Die Kohlenstoffleiter 3 sind aus einem Kohlenstoffmaterial wie beispielsweise Graphit, pyrolytischem Graphit, Graphen, Graphin und/oder Kohlenstoffnanoröhrchen oder aus darauf basierenden Verbindungen, beispielsweise Graphenoxid, hergestellt.

In einem zweiten Schritt des Verfahrens wird der Leiterstrang 1 zusammen mit einem oder mehreren Interkalationsstoffen 2 in eine Gasphase oder Flüssigphase eines Reaktorvolumens 5 eingebracht (Figur 2). Der Interkalationsstoff 2 ist derart ausgewählt, dass er zum Interkalieren in das Material des zumindest einen Kohlenstoffleiters 3 des Leiterstrangs 1 geeignet ist.

In einem dritten Schritt des Verfahrens wird eine Wärmebehandlung des Leiterstrangs 1 durchgeführt, bei der das Reaktorvolumen 5 auf eine Prozesstemperatur gebracht wird zum Einleiten einer Interkalation 4, bei der Atome oder Moleküle des Interkalationsstoffs 2 im Material des jeweiligen Kohlenstoffleiters 3 eingelagert werden, beispielsweise an eine Kohlenstoff-Strukturform des Kohlenstoffleiters 3 angelagert werden, z.B. im Bereich zwischen den Lagen einer mehrlagigen Kohlenstoff-Strukturform.

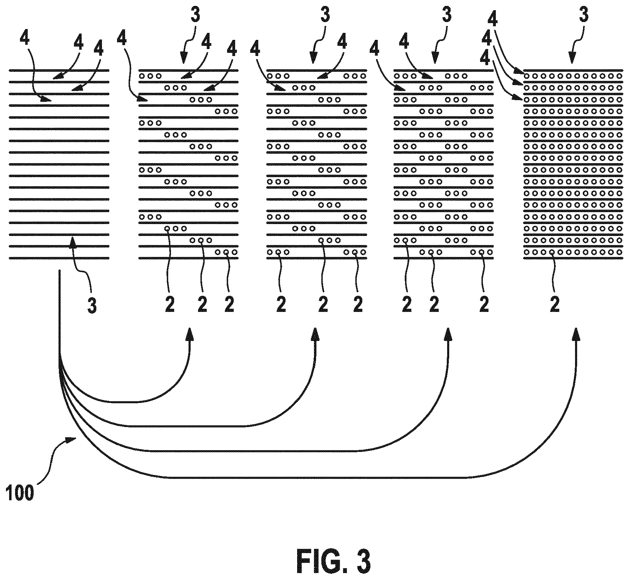

Figur 3 zeigt schematisch einen prinzipiellen Ablauf der Interkalation 100, wobei beispielhaft gezeigt ist, wie der Interkalationsstoff 2 in Zwischenlagen 4 des im Beispiel aus Graphen gebildeten Kohlenstoffmaterials des zumindest einen Kohlenstoffleiters 3 des Leiterstrangs 1 interkaliert. Dabei zeigt Figur 3 verschiedene Stufen der Interkalation 100, bei denen unterschiedliche Mengen des Interkalationsstoffs 2 in das Kohlenstoffmaterial des Kohlenstoffleiters 3 interkaliert sind.

Für die Interkalationsstoffe 2 sind verschiedene Ausgestaltungen vorgesehen, die nachfolgend als drei verschiedene Ausführungsformen beschrieben werden.

Die Interkalationsstoffe 2 können erfindungsgemäß entweder ein oder mehrere Metallhalogenide gemäß einer nicht-erfindungsgemäßen ersten oder erfindungsgemäßen zweiten Ausführungsform oder ein oder mehrere Organoalkalimetalle gemäß einer erfindungsgemäßen dritten Ausführungsform sein.

### IV. Nicht-erfindungsgemäße erste Ausführungsform: Nutzung von Metallfluorid, insbesondere Aluminium (AlF₃)

In einer ersten Ausführungsform ist vorgesehen, Metallfluorid zur interkalativen Dotierung des Leiterstrangs 1 zu verwenden, wobei das Metall des Metallfluorids ausgewählt ist aus einer der Gruppen 2,4,5,6,8,10,11,12 oder 13 des Periodensystems. Beispiele für geeignete Metallfluoride sind Aluminiumfluorid (AlF₃), Zirconiumfluorid (ZrF₄), Eisenfluorid (FeF₃) oder Magnesiumfluorid (MgF₂). Insbesondere amorphes Aluminiumfluorid (AlF₃) ist eine sehr starke Lewis-Säure.

Für den Fall, dass die Interkalation in der Gasphase des Reaktorvolumens 5 durchgeführt wird, kann im zweiten Schritt des Verfahrens zusätzlich gasförmiges Fluor als Hilfsgas in die Gasphase zugegeben werden. Für den Fall, dass die Interkalation in der Flüssigphase des Reaktorvolumens 5 durchgeführt wird, kann eine Flüssigphase mit Fluorionen ausgewählt werden.

Für die Interkalation kann ein niedriges Vakuum im Reaktorvolumen 5 vorgesehen sein. Das Reaktorvolumen 5 wird beispielsweise auf ein Vakuum von bevorzugt maximal 0,1 mbar und besonders bevorzugt von maximal 0,01 mbar evakuiert. Die Wandungen des Reaktorvolumens 5 sind gegenüber dem Interkalationsstoff 2 beständig ausgeführt und sind beispielsweise aus Nickel oder Kupfer gefertigt.

Im dritten Schritt des Verfahrens wird das Reaktorvolumen 5 auf eine Prozesstemperatur von mindestens 750°C erhitzt. Die Prozesstemperatur liegt im Bereich der Sublimationstemperatur des Metallfluorids, beispielsweise oberhalb der Sublimationstemperatur.

Die Interkalation in der Gasphase kann beispielsweise so durchgeführt werden, dass die Temperatur um den Grenzpunkt, an dem die Sublimation einsetzt, mit einer Schwankungsbreite insbesondere von ±20°C bis ± 40°C oszilliert. Dadurch wird erreicht, dass die Temperatur zwischen Sublimation und Resublimation des Interkalationsstoffes pendelt. Somit erfolgt die Interkalation, ohne dass es dabei im Leiterwerkstoff zu einer Clusterbildung von Metallfluorid-Kristallen mit mehr als 10 Vol.% kommt.

Dabei wird berücksichtigt, dass sich der Druck in dem Reaktorvolumen 5 in Abhängigkeit von der Temperatur ändert. Daher wird der Druck bei Raumtemperatur so gewählt, dass der Druck bei Erreichen der Zieltemperatur eine Sublimation des Metallfluorids zulässt. Bevorzugt ist vorgesehen, dass das interkalierte Aluminiumfluorid überwiegend amorph vorliegt, da in diesem Fall die hohe Stärke als Lewis-Säure vorliegt.

Die Dotierung gemäß der ersten Ausführungsform ist insbesondere bis mindestens 300°C stabil, wobei sich Feuchtigkeit nicht zersetzend auf die Dotierung auswirkt. Somit wird eine wirksame und beständige Dotierung erreicht.

### V. Erfindungsgemäße zweite Ausführungsform: Nutzung eines Metallchlorids, Metallbromids oder Metalliodids und nachträgliche in situ-Umwandlung zu einem Metallfluorid

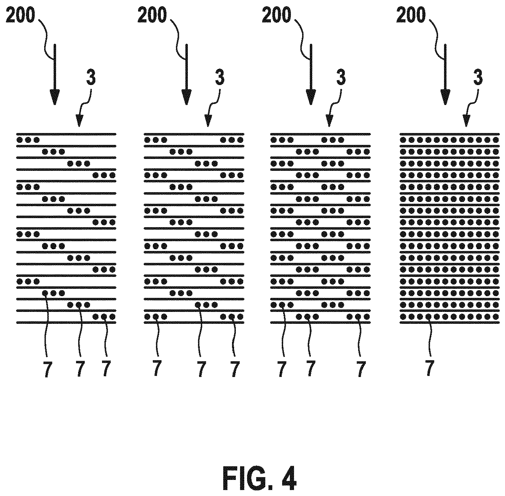

Neben der zuvor beschriebenen ersten Ausführungsform, bei der Metallfluorid als Interkalationsstoff 2 verwendet wird, ist eine zweite Ausführungsform des Verfahrens vorgesehen, bei der mindestens ein Metallchlorid, Metallbromid oder Metalliodid als Interkalationsstoff 2 in den Kohlenstoffleiter 3 interkaliert, wobei das Metall des Metallchlorids, Metallbromids oder Metalliodids ausgewählt ist aus einer der Gruppen 2,4,5,6,8,10,11,12 oder 13 des Periodensystems. Nachfolgend erfolgt ein zusätzlicher Schritt, bei dem durch Fluorierung eine in situ-Umwandlung 200 des Metallchlorids, Metallbromids und/oder Metalliodids zu dem Metallfluorid erfolgt. Dies ist in Figur 4 schematisch dargestellt.

Beispiele für geeignete Interkalationsstoffe gemäß der zweiten Ausführungsform sind Aluminiumchlorid (AlCl₃), Aluminiumbromid (AlBr₃) oder Aluminiumiodid (AlI₃), Zirconiumchlorid (ZrCl₄), Zirconiumbromid (ZrBr₄), Eisenchlorid (FeCl₃), Magnesiumchlorid (MgCl₂), Magnesiumbromid (MgBr₂), Magnesiumiodid (Mgl₂),.

Für den Fall, dass die Interkalation in der Gasphase des Reaktorvolumens 5 durchgeführt wird, kann im zweiten Schritt des Verfahrens zusätzlich gasförmiges Chlor, Brom oder lod als Hilfsgas in das Reaktorvolumen 5 zugegeben werden. Im Falle von einem Metallchlorid als Interkalationsstoff 2 kann beispielsweise Chlor, im Falle von einem Metallbromid als Interkalationsstoff 2 kann beispielsweise Brom und im Falle von einem Metalliodid als Interkalationsstoff 2 kann beispielsweise lod zugegeben werden.

Für den Fall, dass die Interkalation in der Gasphase des Reaktorvolumens 5 durchgeführt wird, kann zusätzlich im zweiten Schritt des Verfahrens Wasserdampf im Reaktorvolumen 5 erzeugt oder in das Reaktorvolumen 5 zugegeben werden. Auf diese Weise kann erreicht werden, dass die aufgrund der Interkalation bewirkte Volumenzunahme des Leiterstrangs bzw. der Kohlenstoffleiter geringer ausfällt als beim Verfahren ohne Wasserdampfzugabe.

In einem vierten Schritt des erfindungsgemäßen Verfahrens wird das im Material des jeweiligen Kohlenstoffleiters 3 vorliegende interkalierte Metallchlorid, Metallbromid und/oder Metalliodid zu Metallfluorid in situ umgewandelt.

Dies geschieht, indem der Leiterstrang 1 mit einem Fluorierungsmittel behandelt wird. Das Fluorierungsmittel ist beispielsweise ausgewählt aus einer Gruppe von Stoffen, die XeF₂, F₂, perfluorierte oder fluorierte Olefine wie insbesondere Hexafluorbuten und Hexafluorpropen, Fluorchlorkohlenwasserstoffe (FCKW) wie insbesondere Trichlorfluormethan, Fluorkohlenwasserstoffe (FKW) wie insbesondere Perfluorhexan, Pentafluorbutan oder Pentafluorpropan umfassen. Das Fluorierungsmittel liegt im vierten Schritt in der Gasphase vor oder geht im vierten Schritt in die Gasphase über. Die Behandlung mit dem Fluorierungsmittel erfolgt beispielsweise bei einer Temperatur kleiner als 200°C.

Hierzu sind beispielsweise die nachfolgend beschriebenen Ausführungsbeispiele möglich:

### Nutzung von Aluminiumchlorid (AlCl₃), Aluminiumbromid (AlBr₃) oder Aluminiumiodid (AlI₃)

Bei diesem Ausführungsbeispiel wird im vierten Schritt amorphes Aluminiumfluorid (AlF₃) im Leiterverbund in-situ erzeugt. Das amorphe Aluminiumfluorid (AlF₃) ist in seiner Stärke als Lewissäure mit der Stärke von Antimonfluorid (SbF₅) und Arsenfluorid (AsF₃) vergleichbar.

In einem Ausführungsbeispiel ist die Fluorierung von Aluminiumchlorid (AlCl₃) vorgesehen, wobei im dritten Schritt das Aluminiumchlorid (AlCl₃) als Interkalationsstoff 2 in dem zumindest einen Kohlenstoffleiter 3 des Leiterstrangs 1 interkaliert wird.

Der Vorteil liegt darin, dass Aluminiumchlorid (AlCl₃) sehr leicht in einen Kohlenstoffleiter 3 interkaliert, da seine Sublimationstemperatur bei 1 bar mit ca. 180°C im Vergleich zu AlF₃ mit ca. 1260°C sehr niedrig ist und AlCl₃ in der Gasphase als tetraedisch koordinierte Dimere vorliegt.

Ein weiterer Vorteil liegt darin, dass im Leiterverbund die in situ Umsetzung von AlCl₃ zu AlF₃ mittels des Fluorierungsmittels bei Raumtemperatur erfolgen kann. Dabei entsteht amorphes AlF₃, das eine hohe Stärke als Lewis-Säure aufweist.

Somit lässt sich die Leitfähigkeit des Kohlenstoffleiters 3 steigern. Da das verwendete AlCl₃ weitgehend zu AlF₃ umgesetzt wird, ergeben sich dieselben Vorteile wie zuvor beschrieben.

Das Aluminiumchlorid (AlCl₃) und der Leiterstrang 1 werden im zweiten Schritt in ein umschlossenes Reaktorvolumen 5 eingebracht, wobei Wandungen 6 des Reaktorvolumens 5 beispielsweise aus Nickel oder Kupfer gefertigt sind. Die Atmosphäre in dem Reaktorvolumen 5 wird bevorzugt gegen ein Inertgas wie insbesondere Argon oder Helium ausgetauscht. Dies geschieht insbesondere durch mehrfaches Evakuieren bis zu einem Druck kleiner als 0,1 mbar und dem Füllen des Vakuums mit einem Inertgas. Alternativ kann das Reaktorvolumen 5 auch durch ein Vakuum von bevorzugt kleiner als 0,1 mbar und besonders bevorzugt von kleiner als 0,01 mbar inertisiert werden. Das Vakuum erhöht den Partialdruck von AlCl₃ und erleichtert dadurch die Dotierung.

Anschließend wird im dritten Schritt bevorzugt bei 80°C bis 250°C wärmebehandelt. Dabei interkaliert das AlCl₃ in den Leiterstrang 1, d.h. den Leiterverbund, so wie schematisch in Figur 3 dargestellt. Die Zeitdauer der Wärmebehandlung hängt insbesondere von der Dicke des Leiterverbundes und der dadurch bestimmten Diffusionsweglänge für das AlCl₃ ab.

Im vierten Schritt erfolgt eine Behandlung mit dem Fluorierungsmittel. Im vierten Schritt wird amorphes AlF₃ im Leiterstrang 1 in situ erzeugt, indem in den Leiterstrang 1 interkaliertes AlCl₃ durch das Fluorierungsmittel fluoriert wird (Fig.4), wie dies nachfolgend beispielhaft mit Fluor als Fluorierungsmittel für eine Umsetzung von Aluminiumchlorid und Fluor zu Aluminiumfluorid und Chlor dargestellt ist:

2 AlCl₃ + 3 F₂ → 2 AlF₃ + 3 Cl₂

Die Fluorierung des AlCl₃ ist stark exotherm und kann daher bei Raumtemperatur erfolgen. Durch diese sehr milden Bedingungen beim Fluorieren kann das gebildete AlF₃ nicht kristallisieren und bleibt somit erfindungsgemäß amorph und besonders vorteilhaft monomolekular feinverteilt im Leiterverbund interkaliert. Das monomolekular feinverteilte AlF₃ ist ein starker Elektronenakzeptor und bewirkt eine Dotierung vom p-Typ für den Kohlenstoffleiter. Dadurch lassen sich hohe elektrische Leitfähigkeiten des Kohlenstoffleiters 3 erreichen.

Dabei findet die stark exotherme Fluorierung entsprechend einer Reaktion von Aluminiumchlorid und Trichlorfluormethan zu Aluminiumfluorid und Tetrachlormethan statt:

AlCl₃ + 3 CFCl₃ → AlF₃ + 3 CCl₄

Während der Lagerung im CFCl₃ diffundiert das im Leiterverbund entstehende CCl₄ ins CFCl₃.

Alternativ zu Aluminiumchlorid (AlCl₃) als Interkalationsstoff 2 kann im dritten Schritt Aluminiumbromid oder Aluminiumiodid in den Kohlenstoffleiter oder Leiterverbund interkaliert werden. Dazu wird der Leiterstrang 1 im dritten Schritt beispielsweise bei 220°C - 360°C wärmebehandelt. Dabei interkaliert das Aluminiumbromid und/oder Aluminiumiodid in den Leiterverbund. Die Zeitdauer der Wärmebehandlung hängt insbesondere von der Dicke des Leiterverbundes und der dadurch bestimmten Diffusionsweglänge für die Aluminiumhalogenide ab. Die Fluorierung von Aluminiumbromid oder Aluminiumiodid ist stark exotherm und kann daher bei Raumtemperatur erfolgen, beispielsweise für Aluminiumbromid entsprechend der nachfolgenden Reaktion:

AlBr3 + 3 CFCl3 → AlF3 + 3 CBrCl3

Bei dieser Reaktion reagieren Aluminiumbromid und Trichlorfluormethan zu Aluminiumfluorid und Trichlorbrommethan.

Bei Fluor als Fluorierungsmittel und Aluminiumbromid als Interkalationsstoff erfolgt die nachfolgende Reaktion:

2 AlBr3 + 3 F2 → 2 AlF3 + 3 Br2

Bei dieser Reaktion wird Aluminiumbromid unter Einwirkung von Fluor zu Aluminiumfluorid und Brom umgesetzt.

Aluminiumbromid oder Aluminiumiodid interkalieren sehr leicht in den Kohlenstoffleiter, da ihre Siedetemperaturen mit 263°C (AlBr₃) bzw. 360°C (AlI₃) im Vergleich zur Sublimationstemperatur von AlF₃ mit ca. 1260°C sehr niedrig sind.

Ein Vorteil des Ausführungsbeispiels ist, dass die Dotierung mit AlF₃ insbesondere bis mindestens 300°C stabil und gegenüber Feuchtigkeit wenig empfindlich ist. Dies behebt den Mangel, dass nach dem Stand der Technik hochwirksame interkalative Dotanden entweder bei erhöhter Temperatur flüchtig sind und in die umgebende Atmosphäre verdampfen oder bei Kontakt mit Luft durch die Luftfeuchtigkeit zersetzt werden, wodurch die Dotierung unwirksam wird.

Durch diese sehr milden Bedingungen beim Fluorieren kann das gebildete AlF₃ nicht kristallisieren und bleibt somit erfindungsgemäß amorph und feinverteilt im Leiterverbund interkaliert.

Der Leiterverbund kann danach beispielsweise bei 120°C ausgelagert werden, um ggf. interkaliertes Trichlorbrommethan (Siedepunkt 105°C) oder CCl₄ (Siedepunkt 76,7°C) aus dem Leiterverbund zu entfernen.

### Nutzung von Zirconiumchlorid (ZrCl₄)

Ein weiteres Ausführungsbeispiel ist die Dotierung mit Zirconiumfluorid (ZrF₄). Zirconiumfluorid (ZrF₄) hat den Vorteil, dass es, wenn es amorph vorliegt, eine der stärksten Lewis-Säuren ist.

Das ZrCl₄ und der Leiterstrang 1 werden im zweiten Schritt in das Reaktorvolumen 5 eingebracht, wobei Wandungen 6 des Reaktorvolumens 5 beispielsweise aus Nickel oder Kupfer gefertigt sind. Die Atmosphäre in dem Reaktorvolumen 5 wird gegen ein Inertgas wie insbesondere Argon oder Helium ausgetauscht. Dies geschieht bevorzugt durch mehrfaches Evakuieren bis zu einem Druck von 0,1 mbar und dem entsprechenden Brechen des Vakuums mit einem Inertgas.

Alternativ kann das Reaktorvolumen 5 auch durch ein Vakuum von bevorzugt kleiner als 0,1 mbar und besonders bevorzugt von kleiner als 0,01 mbar inertisiert werden. Das anliegende Vakuum erniedrigt die Sublimationstemperatur und erhöht den Partialdruck von ZrCl₄ und erleichtert dadurch die Dotierung. Außerdem kann durch die Zugabe von Chlor die Interkalation beschleunigt werden. Dies kann z.B. durch die Zugabe von Goldchlorid (AuCl₃) oder Goldchorid-Monohydrat (AuCl₃·H₂O) erfolgen. Goldchlorid-Monohydrat verliert ab 100°C sein Kristallwasser. Beide Arten Goldchlorid zersetzen sich bei 1 bar Druck ab 254°C und setzen dabei Chlor frei.

Im dritten Schritt wird bevorzugt bei 290°C - 450°C wärmebehandelt. Dabei interkaliert das ZrCl₄ in den Leiterverbund. Die Zeitdauer der Wärmebehandlung hängt insbesondere von der Dicke des Leiterverbundes und der dadurch bestimmten Diffusionsweglänge für das ZrCl₄ ab.

Im vierten Schritt erfolgt eine Behandlung mit dem Fluorierungsmittel. Dieses kann ein perfluoriertes oder fluoriertes Olefin wie insbesondere Hexafluorbuten und Hexafluorpropen, ein Fluorchlorkohlenwasserstoff (FCKW) wie insbesondere Trichlorfluormethan CFCl₃ (Siedebeginn 23,7°C) bzw. Dichlordifluormethan CF₂Cl₂, ein Fluorkohlenwasserstoff (FKW) wie insbesondere Perfluorhexan, Pentafluorbutan oder Pentafluorpropan oder eine andere geeignete Fluorverbindung sein, wie z.B. XeF₂ oder F₂.

Im vierten Schritt wird amorphes Zirconiumfluorid (ZrF₄) im Leiterstrang 1 in situ erzeugt, indem in den Leiterstrang 1 interkaliertes Zirconiumchlorid (ZrCl₄) durch das Fluorierungsmittel fluoriert wird, wie dies beispielhaft mit Fluor als Fluorierungsmittel in der nachfolgenden Reaktion zur Umsetzung von Zirconiumchlorid und Fluor zu Zirconiumfluorid und Chlor dargestellt ist:

ZrCl₄ + 2 F₂ → ZrF₄ + 2 Cl₂

Die Fluorierung des ZrCl₄ ist stark exotherm und kann daher bei Raumtemperatur erfolgen. Durch diese sehr milden Bedingungen beim Fluorieren kann das gebildete ZrF₄ nicht kristallisieren und bleibt somit erfindungsgemäß amorph und besonders vorteilhaft monomolekular feinverteilt im Leiterverbund interkaliert. Dadurch lassen sich hohe elektrische Leitfähigkeiten des Kohlenstoffleiters 3 erreichen.

In einem weiteren Schritt wird der Leiterverbund über flüssigem CFCl₃ gelagert, so dass der Leiterverbind von gasförmigen CFCl₃ in hoher Konzentration von > 30 Vol.% umgeben ist. Dabei findet die stark exotherme Fluorierung entsprechend einer Reaktion von Zirconiumchlorid und Trichlorfluormethan zu Zirconiumfluorid und Tetrachlormethan statt.

ZrCl₄ + 4 CFCl₃ → ZrF₄ + 4 CCl₄

Der Leiterverbund kann danach beispielsweise bei 120°C ausgelagert werden, um ggf. noch vorhandene Spuren von interkaliertem Tetrachlormethan (Siedepunkt 76,7°C), die nicht ins Trichlorfluormethan diffundiert sind, aus dem Leiterverbund zu entfernen.

### Nutzung von Eisenchlorid (FeCl₃)

Ebenso ist die Dotierung mit Eisenfluorid (FeF₃) möglich, da Eisenfluorid (FeF₃), wenn es amorph bzw. monomolekular vorliegt, eine starke Lewis-Säure ist. Dazu wird Eisenchlorid (FeCl₃) als Interkalationsstoff 2 verwendet.

Das Eisenchlorid (FeCl₃) und der Leiterstrang werden im zweiten Schritt in das Reaktorvolumen 5 eingebracht, wobei die Wandungen 6 des Reaktorvolumens 5 bevorzugt aus Nickel oder Kupfer gefertigt sind. Die Atmosphäre in dem Reaktorvolumen 5 wird gegen ein Inertgas wie insbesondere Argon oder Helium ausgetauscht. Dies geschieht bevorzugt durch mehrfaches Evakuieren bis zu einem Druck kleiner als 0,1 mbar und dem entsprechenden Füllen des Vakuums mit einem Inertgas. Alternativ kann das Reaktorvolumen 5 auch durch ein Vakuum von bevorzugt kleiner als 0,1 mbar und besonders bevorzugt von kleiner als 0,01 mbar inertisiert werden. Das Vakuum erhöht die Flüchtigkeit von FeCl₃ und erleichtert dadurch die Dotierung. Außerdem kann durch die Zugabe von Chlor die Interkalation beschleunigt werden. Dies erfolgt beispielsweise durch die Zugabe von Goldchlorid (AuCl₃) oder Goldchorid-Monohydrat (AuCl₃·H₂O). Goldchlorid-Monohydrat verliert ab 100°C sein Kristallwasser. Beide Arten Goldchlorid zersetzen sich bei 1 bar ab 254°C und bei 0,1 mbar bereits ab 65°C unter Chlorabspaltung.

Im dritten Schritt wird bevorzugt bei 120°C - 300°C wärmebehandelt. Dabei interkaliert das FeCl₃ in den Leiterstrang 1. Die Zeitdauer der Wärmebehandlung hängt insbesondere von der Dicke des Leiterstrangs 1 und der dadurch bestimmten Diffusionsweglänge für das FeCl₃ ab.

Im vierten Schritt erfolgt eine Behandlung mit dem Fluorierungsmittel. Dies kann ein perfluoriertes oder fluoriertes Olefin wie insbesondere Hexafluorbuten und Hexafluorpropen, ein Fluorchlorkohlenwasserstoff (FCKW) wie insbesondere Trichlorfluormethan CFCl₃ (Siedebeginn 23,7°C) bzw. Dichlordifluormethan CF₂Cl₂, ein Fluorkohlenwasserstoff (FKW) wie insbesondere Perfluorhexan, Pentafluorbutan oder Pentafluorpropan oder eine andere geeignete Fluorverbindung sein, wie z.B. XeF₂ oder F₂.

Im vierten Schritt wird amorphes FeF₃ im Leiterverbund in situ erzeugt, indem in den Leiterstrang 1 interkaliertes FeCl₃ durch das Fluorierungsmittel fluoriert wird. Insbesondere erfolgt dies durch Fluorwasserstoffsäure, wie dies beispielhaft für in der nachfolgenden Reaktion zur Umsetzung von Eisenchlorid und Fluorwasserstoffsäure zu Eisenfluorid und Salzsäure dargestellt ist:

FeCl₃₍ₛ₎ + 3 HF_{(g)} → FeF₃₍ₛ₎ + 3 HCl_{(g)}

Alternativ lässt sich auch Fluor als Fluorierungsmittel verwenden (Umsetzung von Eisenchlorid und Fluor zu Eisenfluorid und Chlor), wodurch nur noch die Hälfte an Gas bezogen auf FeCl3 entsteht:

2 FeCl₃₍ₛ₎ + 3 F_{2(g)} → 2 FeF₃₍ₛ₎ + 3 Cl_{2(g)}

Noch vorteilhafter ist die Fluorierung mit Trichlorfluormethan (CFCl₃) und Dichlordifluormethan (CF₂Cl₂), da dabei keine Gase, sondern mit Tetrachlormethan (CCl₄) eine Flüssigkeit entsteht, die ohne Expansion aus dem Leiter durch Diffusion entfernt werden kann. Dies ist beispielhaft an der Fluorierung mit CF₂Cl₂ in der nachfolgenden Reaktion zur Umsetzung von Eisenchlorid und Dichlordifluormethan zu Eisenfluorid und Tetrachlormethan gezeigt:

2 FeCl₃₍ₛ₎ + 3 CF₂Cl_{2(g)} → 2 FeF₃₍ₛ₎ + 3 CCl₄₍ₗ₎

Die Fluorierung mit Trichlorfluormethan (CFCl₃) kann beispielsweise erfolgen, indem der Leiterverbund in CFCl₃ getaucht wird. Die stark exotherme Fluorierung erfolgt gemäß der nachfolgenden Reaktion von Eisenchlorid und Trichlorfluormethan zu Eisenfluorid und Tetrachlormethan, insbesondere unter Feuchtigkeitsauschluss:

FeCl₃₍ₛ₎ + 3 CFCl₃₍ₗ₎ → FeF₃₍ₛ₎ + 3 CCl₄₍ₗ₎

Der Leiterverbund kann danach beispielsweise bei 65°C ausgelagert werden, um ggf. noch Spuren von interkaliertem Tetrachlormethan (Siedepunkt 76,7°C) aus dem Leiterverbund zu entfernen, das nicht bereits aus dem Leiterverbund herausdiffundiert ist, als dieser in Trichlormethan eingetaucht war.

Die Fluorierung des FeCl₃ ist stark exotherm und kann daher bei Raumtemperatur erfolgen. Durch diese sehr milden Bedingungen beim Fluorieren kann das gebildete FeF₃ nicht kristallisieren und bleibt somit erfindungsgemäß amorph und besonders vorteilhaft monomolekular feinverteilt im Leiterstrang 1 interkaliert. Dadurch lassen sich hohe elektrische Leitfähigkeiten des Kohlenstoffleiters 3 erreichen.

Im zweiten Schritt kann anstatt des Eisen(III)chlorid FeCl₃ Eisen(II)chlorid (FeCl₂) und Chlor z.B. in Form von Goldchlorid in das Reaktorvolumen 5 eingebracht werden. Dabei wird das FeCl₃ gebildet durch Umwandlung von Eisen(II)chlorid und Goldchlorid in Eisen(III)chlorid und Gold, gemäß der nachfolgenden Reaktion:

3 FeCl₂(ₛ) + AuCl₃₍ₛ₎ → 3 FeCl₃₍ₛ₎ + Au₍ₛ₎

Dieses Eisen(III)chlorid interkaliert dann im dritten Schritt in den Kohlenstoffleiter.

### Nutzung von Magnesiumchlorid, Magnesiumbromid oder Magnesiumjodid

Bei diesem Ausführungsbeispiel wird im vierten Schritt amorphes Magnesiumfluorid MgF₂ im Leiterverbund in-situ erzeugt.

Dazu wird im dritten Schritt Magnesiumchlorid (MgCl₂), Magnesiumbromid (MgBr₂) oder Magnesiumjodid (MgI₂) in den Leiterverbund interkaliert. Anschließend wird im vierten Schritt Magnesiumchlorid (MgCl₂), Magnesiumbromid (MgBr₂) oder Magnesiumjodid (MgI₂) durch das Fluorierungsmittel fluoriert, wie dies in der nachfolgenden Reaktion, beispielhaft für Magnesiumchlorid und mit Fluor als Fluorierungsmittel, dargestellt ist.

MgCl₂ + F₂ → MgF₂ + Cl₂

Magnesiumchlorid (MgCl₂), Magnesiumbromid (MgBr₂) oder Magnesiumjodid (MgI₂) interkalieren sehr leicht in Leiterverbunde mit Kohlenstoffleitern, da ihre Schmelztemperaturen mit 712°C (MgCl2) bzw. 711°C (MgBr2) bzw. 637°C (Mgl2) im Vergleich zur Sublimationstemperatur von MgF₂ mit ca. 1256°C sehr viel niedriger sind. Darüber hinaus wird insbesondere durch Chlor die Interkalation in den Leiterverbund bei Temperaturen unterhalb der Schmelztemperatur der Metallhalogenide ermöglicht. Ein weiterer Vorteil liegt darin, dass im Leiterverbund die in situ Umsetzung von Magnesiumchlorid (MgCl₂), Magnesiumbromid (MgBr₂) oder Magnesiumjodid (MgI₂) zu MgF₂ mittels des Fluorierungsmittels bei Raumtemperatur erfolgen kann. Dabei entsteht amorphes MgF₂, das eine starke Lewissäure ist. Ein weiterer Vorteil besteht darin, dass die Dotierung mit MgF₂ insbesondere bis mindestens 350°C stabil und gegenüber Feuchtigkeit unempfindlich ist.

Die Azidität von MgF₂ kann auf die Stärke von Antimonfluorid (SbF₅) und Arsenfluorid (AsF₃) gesteigert werden, indem das MgF₂ mit einem Fluorid der Formel MF₃ dotiert wird. Dies wird erfindungsgemäß umgesetzt, indem neben dem Magnesiumhalogenid auch mindestens ein weiteres Halogenid der Formel MX₃ (wobei M für ein Metall in Oxidationsstufe +3, wie z.B. Eisen (Fe), Aluminium (AI), Vanadium (V), Chrom (Cr), Indium (In) und Gallium (Ga) steht und wobei X für Chlor, Brom und/ oder Jod steht.) in den Leiterverbund interkaliert wird und im Schritt der Fluorierung ebenfalls in ein Fluorid umgewandelt wird, beispielsweise für Magnesiumchlorid gemäß der Reaktion:

15 MgCl₂ + VCl₃ + 2 AlCl₃ + FeCl₃ + 21 F₂ → 15 MgF₂ + VF₃ + 2 AlF₃ + FeF₃ + 21 Cl₂

### VI. Erfindungsgemäße dritte Ausführungsform: Nutzung eines Organoalkalimetalls und nachträgliche in situ-Umwandlung zu einem Alkalimetallhydrid

Bei der dritten Ausführungsform ist der Interkalationsstoff ein Organoalkalimetall, beispielsweise ein Natriumorganyl, insbesondere Natriumnaphthalid (C₁₀H₈Na), n-Amylnatrium (C₅H₁₁Na) oder Benzylnatrium (C₇H₇Na). Alternativ kann ein Kaliumorganyl, insbesondere Benzylkalium (C₇H₇K) oder Methylkalium (CH₃K), oder ein Lithiumorganyl, insbesondere Benzyllithium (C₇H₇Li), n-Hexyllithium (C₆H₁₃Li), n-Butyllithium (C₄H₉Li) und Phenyllithium (C₆H₅Li), vorgesehen sein.

Im zweiten Schritt wird der Leiterstrang 1 und das in einem Lösemittel gelöste Organoalkalimetall in das Reaktorvolumen 5 eingebracht. Dabei ist der Leiterstrang 1 in das Lösemittel eingetaucht.

Im dritten Schritt erfolgt eine Wärmebehandlung des Leiterstrangs 1 und des in dem Lösemittel gelösten Organoalkalimetalls bei milden Temperaturen von Raumtemperatur bis 200°C, wodurch das Organoalkalimetall in den Kohlenstoffleiter des Leiterstrangs interkaliert.

Im vierten Schritt ist analog zu der zweiten Ausführungsform vorgesehen, dass das im Material des jeweiligen Kohlenstoffleiters vorliegende Organoalkalimetall zu Alkalimetallhydrid, beispielsweise Lithiumhydrid (LiH), Natriumhydrid (NaH) oder Kaliumhydrid (KH), in situ umgewandelt wird. Dies geschieht im Unterschied zur zweiten Ausführungsform dadurch, dass der Leiterstrang 1 in einer Wasserstoffatmosphäre thermisch behandelt wird, beispielsweise bei einer Temperatur von 50°C - 250°C.

Nach der Herstellung des Leiterstrangs gemäß einer der drei Ausführungsformen kann als fünfter Schritt vorgesehen sein, einen Hydrophobierungsstoff in das Material der Kohlenstoffleiters bzw. des Leiterstrangs 1 zu interkalieren, beispielsweise in einer Gasphase oder Flüssigphase. Der Hydrophobierungsstoff kann beispielsweise ein Aliphat, ein Alkan wie insbesondere Undecan, Perfluortripentylamin, Perfluorperhydrofluoren, Perfluorperhydrophenanthren oder Polysiloxan wie insbesondere Polymethylsiloxan sein.

Weiterhin kann nach der Herstellung des bzw. der Kohlenstoffleiter(s) oder des Leiterstrangs gemäß einer der drei Ausführungsformen vorgesehen sein, den Leiterstrang 1 zu verdichten.

## Patentansprüche

1. Verfahren zum Herstellen eines elektrisch leitfähigen Leiterstrangs (1), der zumindest einen Kohlenstoffleiter (3) umfasst, aufweisend die Schritte:
a) Herstellen oder Bereitstellen eines Leiterstrangs (1) als Zwischenerzeugnis umfassend zumindest einen Kohlenstoffleiter (3), der Graphit, pyrolytischem Graphit, Graphen, Graphin und/oder Kohlenstoffnanoröhrchen umfasst,
b) Einbringen des Leiterstrangs (1) und eines oder mehrerer Interkalationsstoffe (2), insbesondere entweder ein oder mehrere Metallhalogenide oder ein oder mehrere Organoalkalimetalle, in eine Gasphase oder Flüssigphase eines Reaktorvolumens (5), wobei der Interkalationsstoff zum Interkalieren in das Material des zumindest einen Kohlenstoffleiters (3) des Leiterstrangs (1) geeignet ist, und
c) Durchführen einer Wärmebehandlung des Leiterstrangs (1), bei der das Reaktorvolumen (5) auf eine Prozesstemperatur gebracht wird zum Einleiten einer Interkalation (4), bei der Atome oder Moleküle des Interkalationsstoffs (2) im Material des jeweiligen Kohlenstoffleiters (3) eingelagert werden, insbesondere an eine Kohlenstoff-Strukturform des Kohlenstoffleiters (3) angelagert werden, insbesondere im Bereich zwischen den Lagen einer mehrlagigen Kohlenstoff-Strukturform,
- wobei der Interkalationsstoff (2) ein Metallchlorid, Metallbromid oder Metalliodid ist, insbesondere Aluminiumchlorid (AlCl₃), Zirconiumchlorid (ZrCl₄), Zirconiumbromid (ZrBr₄), Eisenchlorid (FeCl₃), Magnesiumchlorid (MgCl₂), Magnesiumbromid (MgBr₂), Magnesiumiodid (MgI₂), Aluminiumbromid (AlBr₃) oder Aluminiumiodid (AlI₃), wobei das Metall des Metallchlorids, Metallbromids oder Metalliodids ausgewählt ist aus einer der Gruppen 2,4,5,6,8,10,11,12 oder 13 des Periodensystems, wobei das Verfahren zusätzlich den Schritt umfasst:
- Umwandlung des im Material des jeweiligen Kohlenstoffleiters vorliegenden Metallchlorids, Metallbromids oder Metalliodids zu Metallfluorid, indem der Leiterstrang (1) mit einem Fluorierungsmittel behandelt wird, das insbesondere ein perfluoriertes oder fluoriertes Olefin wie insbesondere Hexafluorbuten und Hexafluorpropen, ein Fluorchlorkohlenwasserstoff (FCKW) wie insbesondere Trichlorfluormethan (CFCl3) oder Dichlordifluormethan (CF2Cl2), ein Fluorkohlenwasserstoff (FKW) wie insbesondere Perfluorhexan, Pentafluorbutan oder Pentafluorpropan, oder eine andere Fluorverbindung wie insbesondere XeF2 oder F2 umfasst und/oder das insbesondere in der Gasphase vorliegt oder insbesondere bei der Behandlung in die Gasphase übergeht, wobei die Behandlung mit dem Fluorierungsmittel insbesondere bei einer Temperatur kleiner als 200°C erfolgt,
oder
- wobei der Interkalationsstoff (2) ein Organoalkalimetall ist, insbesondere ein Natriumorganyl, speziell insbesondere Natriumnaphthalid (C₁₀H₈Na), n-Amylnatrium (C₅H₁₁Na) oder Benzylnatrium (C₇H₇Na), ein Kaliumorganyl, speziell insbesondere Benzylkalium (C₇H₇K) oder Methylkalium (CH₃K), oder ein Lithiumorganyl, speziell insbesondere Benzyllithium (C₇H₇Li), n-Hexyllithium (C₆H₁₃Li), n-Butyllithium (C₄H₉Li) und Phenyllithium (C₆H₅Li), wobei das Verfahren zusätzlich den Schritt umfasst:
- Umwandlung des im Material des jeweiligen Kohlenstoffleiters vorliegenden Organoalkalimetalls zu Alkalimetallhydrid, insbesondere Lithiumhydrid (LiH), Natriumhydrid (NaH) oder Kaliumhydrid (KH), indem der Leiterstrang (1) in einer Wasserstoffatmosphäre thermisch behandelt wird, insbesondere bei einer Temperatur von 50°C bis 250°C.

2. Verfahren nach Anspruch 1, **dadurch gekennzeichnet, dass** das Verfahren im Schritt 1b) den Schritt umfasst:
- Zugabe von gasförmigem Fluor in die Gasphase im Falle einer Interkalation in der Gasphase des Reaktorvolumens oder
- Bereitstellen einer Flüssigphase mit Fluorionen im Falle einer Interkalation in der Flüssigphase des Reaktorvolumens.

3. Verfahren Anspruch 1, **dadurch gekennzeichnet, dass** das Verfahren im Schritt 1b) im Falle einer Interkalation in der Gasphase des Reaktorvolumens den Schritt umfasst:
- Zugabe von gasförmigem Chlor, Brom und/oder lod in das Reaktorvolumen, insbesondere
- Zugabe von Chlor im Falle von einem Metallchlorid als Interkalationsstoff (2),
- Zugabe von Brom im Falle von einem Metallbromid als Interkalationsstoff (2),
- Zugabe von lod im Falle von einem Metalliodid als Interkalationsstoff (2).

4. Verfahren nach einem der vorhergehenden Ansprüche, **dadurch gekennzeichnet, dass** das Verfahren zusätzlich den Schritt umfasst:
- Interkalation eines Hydrophobierungsstoffes, insbesondere Aliphate, wie insbesondere Alkane, wie insbesondere Undecan, Perfluortripentylamin, Perfluorperhydrofluoren, Perfluorperhydrophenanthren oder Polysiloxan, wie insbesondere Polymethylsiloxan, in das Material des jeweiligen Kohlenstoffleiters, insbesondere in einer Gasphase oder Flüssigphase.

5. Verfahren nach einem der vorhergehenden Ansprüche, **dadurch gekennzeichnet, dass** das Verfahren zusätzlich den Schritt umfasst: Verdichten des Leiterstrangs.

## Claims

1. Process for producing an electrically conductive conductor strand (1) comprising at least one carbon conductor (3), comprising the steps of:
a) producing or providing a conductor strand (1) as an intermediate product comprising at least one carbon conductor (3) comprising graphite, pyrolytic graphite, graphene, graphyne and/or carbon nanotubes,
b) introducing the conductor strand (1) and one or more intercalation materials (2), especially either one or more metal halides or one or more organoalkali metals, into a gas phase or liquid phase of a reactor volume (5), wherein the intercalation material is suitable for intercalation into the material of the at least one carbon conductor (3) of the conductor strand (1) and
c) performing a heat treatment of the conductor strand (1) in which the reactor volume (5) is brought to a process temperature for initiating an intercalation (4) where atoms or molecules of the intercalation material (2) are incorporated in the material of the respective carbon conductor (3), especially added to a carbon structure form of the carbon conductor (3), especially in the region between the layers of a multi-layer carbon structure form,
- wherein the intercalation material (2) is a metal chloride, metal bromide or metal iodide, especially aluminium chloride (AlCl₃), zirconium chloride (ZrCl₄), zirconium bromide (ZrBr₄), iron chloride (FeCl₃), magnesium chloride (MgCl₂), magnesium bromide (MgBr₂), magnesium iodide (MgI₂), aluminium bromide (AlBr₃) or aluminium iodide (AlI₃), wherein the metal of the metal chloride, metal bromide or metal iodide is selected from a metal from groups 2, 4, 5, 6, 8, 10, 11, 12 or 13 of the Periodic Table of the Elements, wherein the process additionally comprises the step of:
- converting the metal chloride, metal bromide or metal iodide present in the material of the respective carbon conductor to metal fluoride by treating the conductor strand (1) with a fluorinating agent which especially comprises a perfluorinated or fluorinated olefin such as especially hex-afluorobutene and hexafluoropropene, a chlorofluorocarbon (CFC) such as especially trichlorofluoromethane (CFCI3) or dichlorodifluoromethane (CF2CI2), a hydrofluorocarbon (HFC) such as especially perfluorohexane, pentafluorobutane or pentafluoropropane or another fluorine compound such as especially XeF2 or F2 and/or is present especially in the gas phase or is especially converted to the gas phase during the treatment, wherein the treatment with the fluorinating agent is especially carried out at a temperature below 200°C,
or
- wherein the intercalation material (2) is an organoalkali metal, especially a sodium organyl, very especially sodium naphthalide (C₁₀H₈Na), n-amylsodium (C₅H₁₁Na) or benzylsodium (C₇H₇Na), a potassium organyl, very especially benzylpotassium (C₇H₇K) or methylpotassium (CH₃K), or a lithium organyl, very especially benzyllithium (C₇H₇Li), n-hexyllithium (C₆H₁₃Li), n-butyllithium (C₄H₉Li) and phenyllithium (C₆H₅Li), wherein the process additionally comprises the step of:
- converting the organoalkali metal present in the material of the respective carbon conductor to alkali metal hydride, especially lithium hydride (LiH), sodium hydride (NaH) or potassium hydride (KH), by effecting thermal treatment of the conductor strand (1) in a hydrogen atmosphere, especially at a temperature of 50°C to 250°C.

2. Process according to Claim 1, **characterized in that** the process in step 1b) comprises the step of:
- adding gaseous fluorine to the gas phase in the case of intercalation in the gas phase of the reactor volume or
- providing a liquid phase comprising fluorine ions
in the case of intercalation in the liquid phase of the reactor volume.

3. Process according to Claim 1, **characterized in that** in the case of intercalation in the gas phase of the reactor volume the process in step 1b) comprises the step of:
- adding gaseous chlorine, bromine and/or iodine to the reactor volume, especially
- adding chlorine in the case of a metal chloride as the intercalation material (2),
- adding bromine in the case of a metal bromide as the intercalation material (2),
- adding iodine in the case of a metal iodide as the intercalation material (2).

4. Process according to any of the preceding claims, **characterized in that** the process additionally comprises the step of:
- intercalating a hydrophobic substance, in particular aliphatics, such as especially alkanes, such as especially undecane, perfluorotripentylamine, perfluoro-perhydrofluorene, perfluoroperhydrophenanthrene or polysiloxane, such as especially polymethylsiloxane, into the material of the respective carbon conductor, especially into a gas phase or liquid phase.

5. Process according to any of the preceding claims, **characterized in that** the process additionally comprises the step of: compressing the conductor strand.

## Revendications

1. Procédé de fabrication d'un faisceau conducteur électriquement conducteur (1), qui comprend au moins un conducteur en carbone (3), comprenant les étapes suivantes :
a) la fabrication ou mise à disposition d'un faisceau conducteur (1) en tant que produit intermédiaire comprenant au moins un conducteur en carbone (3), qui comprend du graphite, du graphite pyrolytique, du graphène, du graphyne et/ou des nanotubes de carbone,
b) l'introduction du faisceau conducteur (1) et d'une ou de plusieurs substances d'intercalation (2), en particulier d'un ou de plusieurs halogénures métalliques ou d'un ou de plusieurs organométalliques alcalins, dans une phase gazeuse ou une phase liquide d'un volume de réacteur (5), la substance d'intercalation étant apte à s'intercaler dans le matériau de l'au moins un conducteur en carbone (3) du faisceau conducteur (1), et
c) la réalisation d'un traitement thermique du faisceau conducteur (1), lors duquel le volume de réacteur (5) est amené à une température de procédé afin d'initier une intercalation (4), au cours de laquelle des atomes ou des molécules de la substance d'intercalation (2) sont insérés dans le matériau du conducteur en carbone (3) concerné, en particulier sont fixés sur une forme structurale de carbone du conducteur en carbone (3), en particulier dans la zone située entre les couches d'une forme structurale de carbone multi-couche,
- la substance d'intercalation (2) étant un chlorure métallique, un bromure métallique ou un iodure métallique, en particulier du chlorure d'aluminium (AlCl₃), du chlorure de zirconium (ZrCl₄), du bromure de zirconium (ZrBr₄), du chlorure de fer (FeCl₃), du chlorure de magnésium (MgCl₂), du bromure de magnésium (MgBr₂), de l'iodure de magnésium (MgI₂), du bromure d'aluminium (AlBr₃) ou de l'iodure d'aluminium (AlI₃), le métal du chlorure métallique, du bromure métallique ou de l'iodure métallique étant sélectionné parmi les groupes 2, 4, 5, 6, 8, 10, 11, 12 ou 13 du tableau périodique, le procédé comprenant en outre l'étape suivante :
- la transformation du chlorure métallique, du bromure métallique ou de l'iodure métallique présent dans le matériau du conducteur en carbone concerné en fluorure métallique, en traitant le faisceau conducteur (1) avec un agent de fluoration comprenant en particulier une oléfine perfluo-rée ou fluorée, notamment l'hexafluorobutène et l'hexafluoropropène, un chlorofluorocarbure (CFC), notamment le trichlorofluorométhane (CFCI3) ou le dichlorodifluorométhane (CF2CI2), un fluorocarbure (FC), notamment le perfluorohexane, le pentafluorobutane ou le pentafluoropropane, ou un autre composé fluoré, notamment XeF2 ou F2, et/ou étant présent en particulier en phase gazeuse ou passant en particulier en phase gazeuse pendant le traitement, le traitement avec l'agent de fluoration étant réalisé en particulier à une température inférieure à 200 °C,
ou
- la substance d'intercalation (2) étant un organométallique alcalin, en particulier un composé organosodique, plus particulièrement du naphtalénure de sodium (C₁₀H₈Na), du n-amylsodium (C₅H₁₁Na) ou du benzylsodium (C₇H₇Na), un composé organopotassique, plus particulièrement du benzylpotassium (C₇H₇K) ou du méthylpotassium (CH₃K), ou un composé organolithien, plus particulièrement du benzyllithium (C₇H₇Li), du n-hexyllithium (C₆H₁₃Li), du n-butyllithium (C₄H₉Li) et du phényllithium (C₆H₅Li), le procédé comprenant en outre l'étape suivante :
- la transformation du composé organométallique alcalin présent dans le matériau du conducteur en carbone concerné en hydrure de métal alcalin, en particulier en hydrure de lithium (LiH), en hydrure de sodium (NaH) ou en hydrure de potassium (KH), en soumettant le faisceau conducteur (1) à un traitement thermique dans une atmosphère d'hydrogène, en particulier à une température de 50 °C à 250 °C.

2. Procédé selon la revendication 1, **caractérisé en ce que** le procédé comprend, à l'étape 1b), l'étape suivante :
- l'ajout de fluor gazeux dans la phase gazeuse, dans le cas d'une intercalation dans la phase gazeuse du volume de réacteur, ou
- la mise à disposition d'une phase liquide contenant des ions fluorure,
dans le cas d'une intercalation dans la phase liquide du volume de réacteur.

3. Procédé selon la revendication 1, **caractérisé en ce que** le procédé comprend, à l'étape 1b), dans le cas d'une intercalation dans la phase gazeuse du volume de réacteur, l'étape suivante :
- l'ajout de chlore, de brome et/ou d'iode gazeux dans le volume de réacteur, en particulier,
- l'ajout de chlore dans le cas où la substance d'intercalation (2) est un chlorure métallique,
- l'ajout de brome dans le cas où la substance d'intercalation (2) est un bromure métallique,
- l'ajout d'iode dans le cas où la substance d'intercalation (2) est un iodure métallique.

4. Procédé selon l'une quelconque des revendications précédentes, **caractérisé en ce que** le procédé comprend en outre l'étape suivante :
- l'intercalation d'une substance hydrophobisante, en particulier un composé aliphatique, notamment un alcane, en particulier l'undécane, de la perfluorotripentylamine, du perfluoroperhydrofluorène, du perfluoroperhydrophénan-thrène ou un polysiloxane, notamment un polyméthylsiloxane, dans le matériau du conducteur en carbone concerné, en particulier dans une phase gazeuse ou une phase liquide.

5. Procédé selon l'une quelconque des revendications précédentes, **caractérisé en ce que** le procédé comprend en outre l'étape suivante : le compactage du faisceau conducteur.
